# EUROPÄISCHE PATENTSCHRIFT

(11) **EP 1 317 101 B1**
(45) Veröffentlichungstag und Bekanntmachung des Hinweises auf die Patenterteilung: **14.10.2015**
(21) Anmeldenummer: 02360327.7
(22) Anmeldetag: 27.11.2002
(51) Int. Cl.: H04L 12/54, H04L 12/911, H04L 12/801, H04L 12/851, H04L 12/403

(54) **Verfahren zur Zuweisung von Sendeberechtigungen**
Method for allocating authorisations to send
Méthode pour allouer des autorisations d'émettre

(30) Priorität: 30.11.2001 DE 10158669
(43) Veröffentlichungstag der Anmeldung: 04.06.2003
(73) Patentinhaber: ALCATEL LUCENT, 92100 Boulogne-Billancourt (FR)
(72) Erfinder: Wahl, Stefan, 71701 Schwieberdingen (DE); Klotsche, Ralf, 75305 Neuenbürg (DE)
(74) Vertreter: Wetzel, Emmanuelle

(56) Entgegenhaltungen:
- US-A- 5 968 128
- OZVEREN C M ET AL: "RELIABLE AND EFFICIENT HOP-BY-HOP FLOW CONTROL" IEEE JOURNAL ON SELECTED AREAS IN COMMUNICATIONS, IEEE INC. NEW YORK, US, Bd. 13, Nr. 4, 1. Mai 1995 (1995-05-01), Seiten 642-650, XP000501260 ISSN: 0733-8716

## Beschreibung

Die Erfindung bezieht sich auf ein Verfahren und eine Zentrale zur Zuweisung von Sendeberechtigungen an Endstellen eines der bidirektionalen Übertragung von paketorientierten Daten dienenden Kommunikationsnetzes mit einem Managementsystem und einer Zentrale, in welcher eine den Datenverkehr von den Endstellen zur Zentrale regelnde Zugriffssteuerung vorhanden ist, welcher von den Endstellen ausgesandte Informationen über sendebereite Daten aufgegeben werden und von welcher Sendeberechtigungen nach einem definierten, standardisierten Protokoll zu den Endstellen übertragen werden.

Ein derartiges Verfahren ist heute für unterschiedlichste Aufbauten von Kommunikationsnetzen - im folgenden kurz "Netze" genannt - weltweit standardisiert. Der Datenverkehr in solchen mit bidirektionaler Übertragung von Datenpaketen arbeitenden Netzen wird nach ebenfalls standardisierten Protokollen geregelt, beispielsweise nach dem im folgenden berücksichtigten Medium Access Control (MAC) Protokoll. Zu den Netzen gehören auch standardisierte Managementsysteme, in denen die Topologie des jeweiligen Netzes gespeichert ist. Ein nach dem sogenannten Vielfachzugriffsystem aufgebautes Netz ist beispielsweise ein Punkt-zu-Mehrpunkt-Netz, das auch als Teilnehmerzugangsnetz - im folgenden kurz "Zugangsnetz" genannt - bezeichnet wird. Bei einem Zugangsnetz kann es sich um ein Funknetz, wie beispielsweise LMDS (Local Multipoint Distribution System), oder um ein leitungsgebundenes Netz, wie beispielsweise HFC (Hybrid Fibre Coax) auf Basis von DVB (Digital Video Broadcast) oder DOCSIS (Data Over Cable Service Interface Specification), handeln. Im Zugangsnetz sind Endstellen vorhanden, zu denen von einer Zentrale ausgehende Datenpakete übertragen werden und die selbst Datenpakete zur Zentrale senden können. Auf derartige Zugangsnetze, in denen das Übertragungsmedium mit gegebener Bandbreite des Übertragungskanals zwischen allen mit der Zentrale verbundenen Endstellen geteilt werden muß, bezieht sich die Erfindung.

Um einen ungestörten Betrieb im Zugangsnetz zu ermöglichen, ist in der Zentrale eine mit dem Managementsystem verbundene Zugriffsteuerung vorhanden, die im folgenden kurz mit "MAC" bezeichnet wird. Die MAC nutzt das standardisierte MAC Protokoll, um die Bandbreite des Übertragungskanals zu kontrollieren. Die MAC ist eine Schicht im sogenannten OSI (Open System Interconnection) Modell, das aus sieben Schichten besteht. Die erste Schicht im OSI Modell ist die mit den Endstellen verbundene Anschluß-Schicht. Die MAC-Schicht ist die zweite Schicht. Sie transportiert die paketorientierten Daten. Auf der MAC Schicht werden auch Zuteilungen von System-Resourcen gesteuert. Das sind beispielsweise Sendeberechtigungen für die Endstellen. So werden den Endstellen als Sendeberechtigungen beispielsweise Zeitschlitze, Frequenzen, Codes, Bandbreiten oder beliebige Kombinationen daraus zugewiesen. Die MAC Schicht ist auch zuständig für die Funktionssicherheit, die Qualität und die Leistung im Zugangsnetz sowie für die Einhaltung von Dienstequalitäten des jeweils gültigen Protokolls. Die Zuteilung der Sendeberechtigungen basiert auf Informationen, welche die Zentrale und damit die MAC von den Endstellen erhält.

In heutiger Netztechnik muß für jeden Netzaufbau eine eigene, angepaßte MAC entwickelt und eingesetzt werden, die bei einem anderen Netztyp nicht verwendbar ist.

Ein Beispiel für den Stand der Technik ist OZVEREN C M ET AL: "RELIABLE AND EFFICIENT HOP-BY-HOP FLOW CONTROL", IEEE JOURNAL ON SELECTED AREAS IN COMMUNICATIONS, IEEE INC. NEW YORK, US, Bd. 13, Nr. 4, 1. Mai 1995 (1995-05-01), Seiten 642-650.
Das Dokument offenbart ein Verfahren zur Flußkontrolle und Bandbreitenaufteilung. Sendeberechtigungen werden in Form von "credits" vergeben.

Der Erfindung liegt die Aufgabe zugrunde, das eingangs geschilderte Verfahren und die eingangs geschilderte Zentrale so zu gestalten, daß sie unabhängig vom jeweiligen Netztyp einsetzbar sind.

Diese Aufgabe wird gemäß der Erfindung dadurch gelöst,
- daß die Zugriffssteuerung mit einem ersten Adaptions-Modul, einem Prozessor und einem zweiten Adaptions-Modul ausgerüstet wird,
- daß dem ersten Adaptions-Modul die Informationen der Endstellen aufgegeben werden,
- daß der erste Adaptions-Modul dem Prozessor unabhängig von der Art des Netzes Kennungen der einzelnen Endstellen und die Anzahl der von diesen als sendebereit gemeldeten Bits bzw. Bytes aufgibt,
- daß der mit einem allgemeinen Algorithmus arbeitende Prozessor dem zweiten Adaptions-Modul unter Berücksichtigung zumindest der zur Verfügung stehenden Bandbreite des Übertragungskanals und der geforderten Dienstequalität zumindest die Anzahl der von den einzelnen Endstellen abzusendenden Bits bzw. Bytes und deren Kennung aufgibt und
- daß der zweite Adaptions-Modul die entsprechenden Sendeberechtigungen an die Endstellen im dem jeweiligen Netz angepaßten Protokoll überträgt.

Dieses Verfahren und diese Zentrale sind unabhängig vom Netztyp einsetzbar, da der in der MAC vorhandene Prozessor nach einem allgemein gültigen Algorithmus arbeitet. Er braucht daher keine Informationen über den jeweiligen Netztyp. Ein Prozessor kann hier ein hardware - oder softwaremäßig darzustellendes Element sein, beispielsweise eine 1 oder mehr Chip Realisierung auf einer Baugruppe. Dem Prozessor werden vom ersten Adaptions-Modul stets nur Kennungen von Endstellen und die Anzahl der Bits bzw. Bytes aufgegeben, welche die einzelnen Endstellen senden wollen. Dazu erhält der erste Adaptions-Modul von den Endstellen Informationen über zu sendende Datenpakete bzw. Bytes in dienstespezifischer Darstellung. Er gibt die erwähnten Informationen an den Prozessor weiter. Dieser ist mit dem Managementsystem des Netzes verbunden. Der Prozessor bildet unter Berücksichtigung der ihm vom Managementsystem gelieferten Daten und der ihm bekannten Bandbreite des Übertragungskanals mit einem universellen Algorithmus generische Sendeberechtigungen, die vom zweiten Adaptions-Modul an die Endstellen übertragen werden, und zwar im jeweils gültigen, dem zugehörigen Netztyp angepaßten MAC Protokoll. Eine Sendeberechtigung enthält zumindest die Kennungen der betroffenen Endstellen und die den einzelnen Endstellen zugeordnete Anzahl von Bits bzw. Bytes.

Zur fairen Zuweisung der Sendeberechtigungen und zur Sicherung der Qualität der Übertragung können dem Prozessor vom Managementsystem des Netzes Zusatzinformationen über die einzelnen Endstellen aufgegeben werden, wie beispielsweise Sendezeiten und Übertragungsart. Weitere Zusatzinformationen für den Prozessor können den jeweiligen Zustand des Übertragungsmediums betreffen. Das kann insbesondere bei Funknetzen von Bedeutung sein.

Das Verfahren nach der Erfindung wird anhand der Zeichnungen in Ausführungsbeispielen erläutert.

Es zeigen:
Fig. 1 in schematischer Darstellung einen üblichen Aufbau eines Kommunikationsnetzes.
Fig. 2 ebenfalls in schematischer Darstellung ein Zugangsnetz.
Fig. 3 eine in einer Zentrale des Zugangsnetzes enthaltene Zugriffsteuerung in Form von Balken.
Fig. 4 eine Einzelheit einer Zugriffsteuerung.

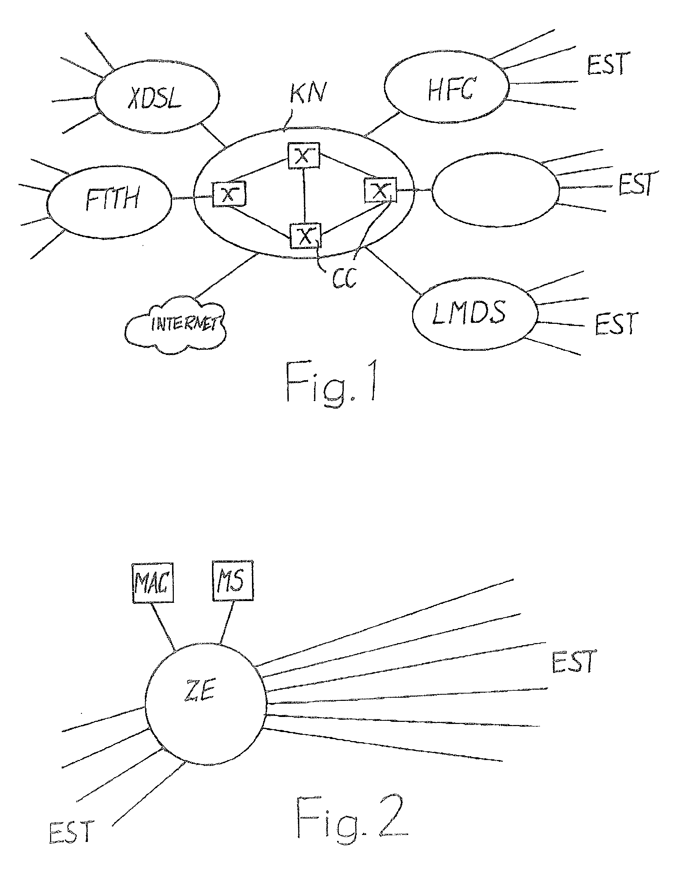

Ein übliches Kommunikationsnetz besteht gemäß Fig. 1 beispielsweise aus einem Kernnetzwerk KN, an welches unterschiedliche Teilnetze angeschlossen sind und miteinander verbunden werden können. Dazu sind im Kernnetzwerk KN geeignete Crossconnectoren CC vorhanden. Teilnetze sind beispielsweise digitale Teilnehmernetze XDSL, optische Teilnehmernetze FTTH und das Internet. Andere Teilnetze, in denen die angeschlossenen Teilnehmer bzw. Endstellen sich einen Übertragungskanal mit gegebener Bandbreite teilen müssen, sind beispielsweise die beiden eingangs erwähnten Zugangsnetze HFC (leitungsgebunden) und LMDS (Funk). Derartige Zugangsnetze betrifft die Erfindung.

Ein Zugangsnetz weist gemäß Fig. 2 eine Zentrale ZE auf, an welche Endstellen EST angeschlossen sind. Der ZE sind eine Zugriffsteuerung MAC und ein Managementsystem MS zugeordnet. Die MAC kontrolliert die Bandbreite des für alle EST gemeinsamen Übertragungskanals. Sie teilt auch Sendeberechtigungen zu. Im MS ist die Topologie des Zugangsnetzes gespeichert.

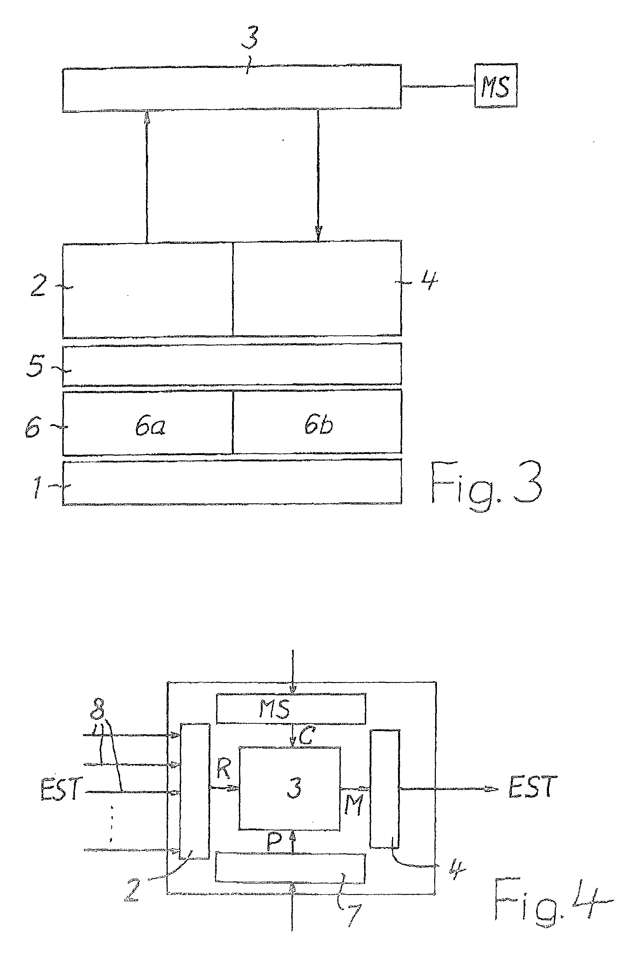

Das Zugangsnetz kann beispielsweise das Funknetz LMDS sein. Zur Zuweisung von Sendeberechtigungen senden die EST die Anzahl von Bits bzw. Bytes, die sendebereit sind und gesendet werden sollen, als Anfragen zur ZE. Sie gelangen zu der in Fig. 3 angedeuteten Anschluß-Schicht 1 der MAC und werden dort nach dem MAC Protokoll ausgewertet und aufbereitet. Von den so gewonnenen Anfragen werden nur die Kennungen der EST und die zugehörige Anzahl von angefragten Bytes einem ersten Adaptions-Modul 2 aufgegeben. Dieser gibt die entsprechenden Informationen an einen nach einem allgemeinen Algorithmus arbeitenden Prozessor 3 weiter, der auch mit dem MS verbunden ist. Unter Berücksichtigung der ihm bekannten Bandbreite des für alle EST des LMDS gemeinsamen Übertragungskanals und der ihm vom MS zugeführten Topologie des Zugangsnetzes bildet der Prozessor 3 generische Sendeberechtigungen, welche er einem zweiten Adaptions-Modul 4 zuführt. Die Sendeberechtigungen werden im MAC entsprechend dem MAC Protokoll aufbereitet und aufgelistet. Sie enthalten zumindest die Kennungen der EST und die Anzahl der den einzelnen EST zugewiesenen Bytes. Die Sendeberechtigungen gelangen zur Anschluß-Schicht 1 und werden von dort zu den EST übertragen.

Zwischen der Anschluß-Schicht 1 und den Adaptions-Modulen 2 und 4 sind in Fig. 3 zwei weitere Balken 5 und 6 eingezeichnet, durch welche elektronische Schaltungen bzw. Arbeitsabläufe repräsentiert sind. Im Balken 5 wird die jeweils anfallende Information bearbeitet. Sie wird nach ihrem korrekten Format und bezüglich der Adressierung untersucht. Ihr Inhalt wird extrahiert. Der Balken 6 ist in zwei Teile 6a und 6b unterteilt. Im Teil 6a werden die über die Anschluß-Schicht 1 von den EST ankommenden Informationen mit allen zusätzlichen Details (Overhead) auf ihre Korrektheit überprüft. Das gilt in abgehender Übertragungsrichtung im gleichen Sinne für den Teil 6b.

Für die Vergabe der Sendeberechtigungen reicht der geschilderte einfachste Fall grundsätzlich aus, mit dem den EST die Anzahl der Bytes zugeteilt wird. Da der Prozessor 3 über das angeschlossene MS aber die Topologie des ganzen Zugangsnetzes und damit auch die Qualität der unterschiedlichen EST kennt, können den Sendeberechtigungen auch weitere Informationen zugefügt werden. Das sind beispielsweise Sendezeiten, Positionen von Zeitschlitzen, Modulationsart und Codeschema. Es können auch unterschiedliche Prioritäten der einzelnen EST berücksichtigt werden. Dabei ist stets eine faire Verteilung der Sendeberechtigungen anzunehmen, so daß alle sendewilligen EST in angemessener Zeit berücksichtigt werden.

Der gleiche Verfahrensablauf, wie er anhand von Fig. 3 für das Funknetz LMDS beschrieben wurde, gilt auch für leitungsgebundene Netze, beispielsweise das oben erwähnte HFC auf Basis von DVB. Die ankommenden Anfragen und die abgehenden Sendeberechtigungen werden analog zum LMDS aufbereitet. Auch hier werden vom ersten Adaptions-Modul 2 wieder nur die Kennungen und die Anzahl der von den EST zu sendenden Bytes an den Prozessor 3 gegeben. Auch hier werden vom Prozessor 3 nach Maßgabe von Bandbreite und Informationen des MS generische Sendeberechtigungen mit mindestens den Kennungen und der Anzahl der Bytes dem zweiten Adaptions-Modul 4 aufgegeben.

In Fig. 4 sind der Prozessor 3 und die beiden Adaptions-Module 2 und 4 in einer anderen schematischen Zuordnung dargestellt. Es ist daraus eine Hauptrichtung der Informationsübertragung zu erkennen, die durch die Pfeile R und M gekennzeichnet ist. Dem Prozessor 3 werden gemäß Pfeil C Informationen aus dem MS zugeführt. Weitere Informationen können dem Prozessor 3 gemäß Pfeil P aus einem Kästchen 7 aufgegeben werden, die sich auf den aktuellen physikalischen Zustand des Übertragungsmediums beziehen. Diese Informationen können insbesondere bei Funknetzen von Bedeutung sein. Bei diesen kann die Bandbreite des Übertragungskanals durch atmosphärische Einflüsse schnell eingeschränkt werden, so daß es zu einer Erhöhung der Bitfehlerrate kommen kann. Das kann durch mechanische äußere Einflüsse auch bei leitungsgebundener Übertragung geschehen.

Neben den bei Fig. 3 erwähnten Informationen können dem Adaptions-Modul 2 mit den Anfragen der EST auch weitere Einzeleinheiten aufgegeben werden. Das sind beispielsweise in der Übertragungstechnik gebräuchliche Informationen, wie "piggy backing", "request message", "poll me" und "slip indication". Diese zusätzlichen Einzelheiten sind in Fig. 4 durch mehrere Pfeile 8 angedeutet. Sie sollen zeigen, daß die entsprechenden Anfragen von den EST kommen. Der erste Adaptions-Modul 2 konvertiert diese einzelnen Informationen und gibt an den Prozessor 3 nach Aufbereitung stets nur Kennung und Anzahl der Bytes weiter. Beide Adaptions-Module 2 und 4 müssen zumindest die im angewendeten Protokoll typischen Bandbreitenanforderungen in abstraktere und allgemeingültige Anforderungen übersetzen.

## Patentansprüche

1. Verfahren zur Zuweisung von Sendeberechtigungen an Endstellen eines der bidirektionalen Übertragung von paketorientierten Daten dienenden Kommunikationsnetzes mit einem Managementsystem und einer Zentrale, in welcher eine den Datenverkehr von den Endstellen zur Zentrale regelnde Zugriffssteuerung vorhanden ist, welcher von den Endstellen ausgesandte Informationen über sendebereite Daten aufgegeben werden und von welcher Sendeberechtigungen nach einem definierten, standardisierten Protokoll zu den Endstellen übertragen werden, **dadurch gekennzeichnet, daß** dann, wenn die Zugriffssteuerung, MAC, mit einem ersten Adaptions-Modul (2), einem Prozessor (3) und einem zweiten Adaptions-Modul (4) ausgerüstet ist,
- dem ersten Adaptions-Modul (2) die Informationen der Endstellen, EST, aufgegeben werden,
- der erste Adaptions-Modul (2) dem Prozessor (3) unabhängig von der Art des Kommunikationsnetzes Kennungen der einzelnen Endstellen, EST, und die Anzahl der von diesen als sendebereit gemeldeten Bits bzw. Bytes aufgibt,
- der mit einem allgemeinen Algorithmus arbeitende Prozessor (3) dem zweiten Adaptions-Modul (4) unter Berücksichtigung zumindest der zur Verfügung stehenden Bandbreite des Übertragungskanals und der geforderten Dienstequalität zumindest die Anzahl der von den einzelnen Endstellen, EST, abzusendenden Bits bzw. Bytes und deren Kennung aufgibt und
- der zweite Adaptions-Modul (4) die entsprechenden Sendeberechtigungen an die Endstellen, EST, im dem jeweiligen Kommunikationsnetz angepaßten Protokoll überträgt.

2. Verfahren nach Anspruch 1, **dadurch gekennzeichnet, daß** dem Prozessor (3) Zusatzinformationen über den physikalischen Zustand des Übertragungsmediums aufgegeben werden.

3. Verfahren nach Anspruch 1 oder 2, **dadurch gekennzeichnet, daß** mit den Sendeberechtigungen auch die Sendezeiten und die Übertragungsart zu den Endstellen, EST, übertragen werden.

4. Zentrale eines der bidirektionalen Übertragung von paketorientierten Daten dienenden Kommunikationsnetzes, welches ein Managementsystem und besagte Zentrale umfaßt, zur Zuweisung von Sendeberechtigungen an Endstellen, in welcher eine den Datenverkehr von den Endstellen zur Zentrale regelnde Zugriffssteuerung vorhanden ist, mit einem Aufbau besagter Zentrale, bei dem ihr von den Endstellen ausgesandte Informationen über sendebereite Daten aufgegeben werden und bei dem sie Sendeberechtigungen nach einem definierten, standardisierten Protokoll zu den Endstellen überträgt, **dadurch gekennzeichnet,**
- **daß** die Zugriffssteuerung, MAC, mit einem ersten Adaptions-Modul (2), einem Prozessor (3) und einem zweiten Adaptions-Modul (4) ausgerüstet ist,
- **daß** die Zugriffssteuerung, MAC, so aufgebaut ist, daß dem ersten Adaptions-Modul (2) die Informationen der Endstellen, EST, aufgegeben werden,
- **daß** die Zugriffssteuerung, MAC, weiter so aufgebaut ist, daß der erste Adaptionsmodul (2) dem Prozessor (3) unabhängig von der Art des Kommunikationsnetzes Kennungen der einzelnen Endstellen, EST, und die Anzahl der von diesen als sendbereit gemeldeten Bits bzw. Bytes aufgibt,
- **daß** die Zugriffssteuerung, MAC, weiter so aufgebaut ist, daß der mit einem allgemeinen Algorithmus arbeitende Prozessor (3) dem zweiten Adaptions-Modul (4) unter Berücksichtigung zumindest der zur Verfügung stehenden Bandbreite des Übertragungskanals und der geforderten Dienstequalität zumindest die Anzahl der von den einzelnen Endstellen, EST, abzusendenden Bits bzw. Bytes und deren Kennung aufgibt und
- **daß** die Zugriffssteuerung, MAC, weiter so aufgebaut ist, daß der zweite Adaptions-Modul (4) die entsprechenden Sendeberechtigungen an die Endstellen , EST, im dem jeweiligen Kommunikationsnetz angepaßten Protokoll überträgt.

## Claims

1. Method for allocating send authorizations at the terminals of a communication network serving the bidirectional transmission of packet-oriented data with a management system and a control center, in which an access control regulating the data traffic from the terminals to the control center is provided, to which information sent from the terminals is emitted via ready-to-send data, and from which send authorizations are transmitted to the terminals according to a defined, standardized protocol, **characterized in that** when the access control, MAC, is equipped with a first adaptation module (2), a processor (3) and a second adaptation module (4),
- the information of terminals, EST, is emitted from the first adaptation module (2),
- regardless of the type of communication network, the first adaptation module (2) emits the identifiers of the individual terminals, EST, and the number thereof signaled as ready-to-send bits and bytes, from the processor (3),
- the processor (3) working with a general algorithm emits from the second adaptation module (4) at least the number of bits and bytes to be sent from the individual terminals, EST, and their identifier, taking account at least of the available bandwidth of the transmission channel and the required service quality, and
- the second adaptation module (4) transmits the corresponding send authorizations to the terminals, EST, in the respective communication-network adapted protocol.

2. Method according to Claim 1, **characterized in that** additional information concerning the physical state of the transmission medium is emitted from the processor (3).

3. Method according to Claim 1 or 2, **characterized in that** the send times and the transmission mode are also transmitted to the terminals, EST, with the send authorizations.

4. Control center of a communication network serving the bidirectional transmission of packet-oriented data, comprising a management system and said control center, for the allocation of send authorizations to terminals, in which an access control regulating the data traffic from the terminals to the control center is provided, with a construction of said control center, whereby information sent from the terminals is emitted to it via ready-to-send data, and whereby it transmits send authorizations to the terminals according to a defined, standardized protocol, **characterized in that**
- the access control, MAC, is equipped with a first adaptation module (2), a processor (3) and a second adaptation module (4),
- the access control, MAC, is constructed such that the information of the terminals, EST, is emitted from the first adaptation module (2),
- the access control, MAC, is furthermore constructed such that regardless of the type of communication network, the first adaptation module (2) emits the identifiers of the individual terminals, EST, and the number thereof signaled as ready-to-send bits and bytes, from the processor (3),
- the access control, MAC, is furthermore constructed such that the processor (3) working with a general algorithm emits from the second adaptation module (4) at least the number of the bits and bytes to be sent from the individual terminals, EST, and their identifier, taking account at least of the available bandwidth of the transmission channel and the required service quality, and
- the access control, MAC, is furthermore constructed such that the second adaptation module (4) transmits the corresponding send authorizations to the terminals, EST, in the respective communication-network adapted protocol.

## Revendications

1. Procédé d'attribution d'autorisations d'émission à des terminaux d'un réseau de communication servant à la transmission bidirectionnelle de données en paquets, comprenant un système de gestion et une centrale, dans laquelle il existe un contrôle d'accès qui régule le trafic de données entre les terminaux et la centrale, lesquelles sont cédées par les informations sur les données prêtes à être émises envoyées par les terminaux et par lesquelles sont transmises des autorisations d'émission aux terminaux selon un protocole normalisé défini,
**caractérisé en ce que** lorsque le contrôle d'accès, MAC, est équipé d'un premier module d'adaptation (2), d'un processeur (3) et d'un deuxième module d'adaptation (4),
- les informations des terminaux, EST, sont cédées au premier module d'adaptation (2),
- le premier module d'adaptation (2) cède au processeur (3), indépendamment de la nature du réseau de communication, les identifiants des terminaux, EST, individuels et le nombre de bits ou d'octets signalés par ceux-ci comme étant prêts à être émis,
- le processeur (3), qui fonctionne avec un algorithme général, cède au deuxième module d'adaptation (4), en tenant compte au moins de la largeur de bande disponible du canal de transmission et de la qualité de service exigée, au moins le nombre de bits ou d'octets à envoyer par les terminaux, EST, individuels ainsi que leur identifiant, et
- le deuxième module d'adaptation (4) transmet les autorisations d'émission correspondantes aux terminaux, EST, dans le protocole adapté au réseau de communication respectif.

2. Procédé selon la revendication 1, **caractérisé en ce que** des informations sur l'état physique du support de transmission sont cédées au processeur (3).

3. Procédé selon la revendication 1 ou 2, **caractérisé en ce que** les heures d'émission et le mode de transmission vers les terminaux, EST, sont également transmis avec les autorisations d'émission.

4. Centrale d'un réseau de communication servant à la transmission bidirectionnelle de données en paquets, lequel comprend un système de gestion et ladite centrale, servant à attribuer des autorisations d'émission à des terminaux, dans laquelle il existe un contrôle d'accès qui régule le trafic de données entre les terminaux et la centrale, avec une constitution de ladite centrale avec laquelle les informations sur les données prêtes à être émises qui sont envoyées par les terminaux lui sont cédées et avec laquelle elle transmet les autorisations d'émission aux terminaux selon un protocole normalisé défini,
**caractérisée en ce**
- **que** le contrôle d'accès, MAC, est équipé d'un premier module d'adaptation (2), d'un processeur (3) et d'un deuxième module d'adaptation (4),
- **que** le contrôle d'accès, MAC, est constitué de telle sorte que les informations des terminaux, EST, sont cédées au premier module d'adaptation (2),
- **que** le contrôle d'accès, MAC, est en outre constitué de telle sorte que le premier module d'adaptation (2) cède au processeur (3), indépendamment de la nature du réseau de communication, les identifiants des terminaux, EST, individuels et le nombre de bits ou d'octets signalés par ceux-ci comme étant prêts à être émis,
- **que** le contrôle d'accès, MAC, est en outre constitué de telle sorte que le processeur (3), qui fonctionne avec un algorithme général, cède au deuxième module d'adaptation (4), en tenant compte au moins de la largeur de bande disponible du canal de transmission et de la qualité de service exigée, au moins le nombre de bits ou d'octets à envoyer par les terminaux, EST, individuels ainsi que leur identifiant, et
- **que** le contrôle d'accès, MAC, est en outre constitué de telle sorte que le deuxième module d'adaptation (4) transmet les autorisations d'émission correspondantes aux terminaux, EST, dans le protocole adapté au réseau de communication respectif.
